# EUROPEAN PATENT APPLICATION

(11) **EP 3 015 852 A1**
(43) Date of publication of application: **04.05.2016**
(21) Application number: 14191101.6
(22) Date of filing: 30.10.2014
(51) Int. Cl.: G01N 23/04, H02B 13/035

(54) **METHOD FOR ON-SITE X-RAY INSPECTION OF A CABLE SEALING END TERMINATION**

(71) Applicant: RWE Innogy GmbH, 45127 Essen (DE)
(72) Inventor: Runge, Jörn, 20251 Hamburg (DE); Jami, Imran, Swindon, SN 25 2BH (GB)
(74) Representative: Kierdorf Ritschel Richly

(57) **Abstract**

The invention refers to a method for on-site X-ray inspection of a cable sealing end termination of a high-voltage cable in joint condition, such as found when inspecting gas insulated switchgear of electrical high voltage sub-stations, comprising the following steps:
- providing a radiation generator (8) capable of emitting upon energization electromagnetic waves with a wave length and a photon energy in the x-ray range,
- providing a photographic recording media (9) sensitive to the electromagnetic waves,
- placing the recording media (9) and the radiation generator (8) at opposite sides of the cable sealing end termination such that the radiation generator (8) is directed towards the cable sealing end termination as a x-ray target,
- energizing the radiation generator (8) at least once in order to record at least one x-ray image,
- providing at least one reference image of a cable sealing end termination as a test target,
- comparing the x-ray image with the reference image and subsequently assessing the sealing integrity of the cable sealing end termination.

## Description

The invention refers to a method for on-site inspection of a cable sealing end termination of a high-voltage cable in joint condition with switchgear.

Generally, high-voltage cable is used for electric power transmission at high voltage. High-voltage cable of different types have a variety of applications in AC and DC power transmission. In all applications, the insulation of the cable must not deteriorate due to the high-voltage stress or due to bending of the cable. The cable system generally must prevent contact of the high-voltage conductor embedded in the insulation with other objects or persons, and must contain and control leakage current. Cable joints and terminals must be designed to control the high-voltage stress to prevent breakdown of the insulation.

In particular, cables for power distribution of 10 kV or higher may be insulated with oil and are run in a rigid steel pipe, semi-rigid aluminum or lead sheath. For higher voltages the oil may be kept under the pressure to prevent formation of voids that would allow partial discharges within the cable insulation.

A typical outdoor termination for a high-voltage cable is for instance disclosed in EP 1 170 846 A1.

A high-voltage direct current electrically cable with a mass-impregnated insulation is for instance disclosed in EP 0 971 371 A1.

Typically so called oil sealed cable terminations for high-voltage cables are insulated with a plastic material and in the interior of the insulator body are filled with an insulated filling fluid in the form of a liquid under pressure. Due to the fact that the filling being a liquid under pressure the termination needs to be gas- and fluid-tight during all occurring operation conditions.

For example oil seals are typically at a pressure of between 1 and 2 bar and may experience disocation due to bending and stresses during installation or due to imperfections left during making of the seal.

Failure of a seal may result in oil leakage and hence any problems with the seal could lead to significant commercial loss to the electric utility companies since it would then be required to disable the electrical circuit for repair of the termination.

Thus there is a need to provide a system for early warning of leak developing.

Theoretically it would be possible to monitor the oil pressure of the termination and to use the indication of the oil pressure to assess whether the sealing is intact or not. However, such constant oil pressure monitoring of the filling oil or other filling compound is quite an effort. Apart from that a loss of oil pressure could be minor so that ultimately ensuring the integrity of the seal requires to physically strip down the cable end, i.e. to drain the oil and to completely dismantle the termination.

Accordingly, it is an object of the present invention to provide an in-situ inspection technique without disturbing the actual cable system.

These and other objects are achieved by a method for on-site inspection of a cable sealing end termination of a high-voltage cable according to claim 1.

Advantageous embodiments of the method according to the invention may be derived from the dependant claims.

According to one aspect of the invention there is provided a method for on-site inspection of a cable sealing end termination of a high-voltage cable in joint condition, comprising the following steps:
- providing a radiation generator capable of emitting upon energization electromagnetic waves with a wave length and an intensity in the x-ray range,
- providing a photographic recording media sensitive to the electromagnetic waves,
- placing the recording media and the radiation generator at opposite sides of the cable sealing end termination such that the radiation generator is directed towards the cable sealing end termination as an x-ray target,
- energizing the radiation generator at least once in order to record at least one x-ray image on the recording media,
- providing at least one reference image of a cable sealing end termination as a test target,
- comparing the x-ray image with the reference image and subsequently assessing the sealing integrity of the cable sealing end termination.

The above referred method does not need oil or any other insulating compound to be drained from the cable sealing ends. No part of the cable system has to be detached or dismantled so that the method according to the invention has the advantage that additional bending into the cables due to dislocation of the termination will be avoided. Particularly bending and moving of the cable ends during installation has been identified to be a cause for potential leakage which might not occur immediately but after a certain time.

As generally the process of manufacturing the termination in particular the process of providing a packing around the seal is done by hand there is a chance of a non-uniform packing around the seal. The method according to the invention acts as a finger print impression of the seal and particularly shows the condition of the packing around the seal and the location of the tapes which are used to fix the packing.

A radiation generator in the sense of the current invention may be a directional x-ray system which is generally commercially available.

X-ray range in the sense of the current application means electromagnetic waves with a photon energy between 100 eV and several thousand eV with a wave length between 10⁻⁸ m and 10⁻¹² m.

The reference image used for the assessment whether the sealing is intact or not can be also an x-ray image which has been captured prior to assembly or at the time of assembly of the termination or alternatively a picture of the dismantled termination which has been made at the time of manufacturing the termination.

Alternatively as a reference image an image of a connected cable sealing end termination can be taken which is of the same type and which is deemed to be intact.

Preferably the cable sealing end termination is connected to an insulated switchgear, preferably said switchgear is a gas insulated switchgear, for example a gas insulated switchgear of a high-voltage substation.

More preferably the cable sealing end termination comprises a pressurized oil sealing.

The cable sealing end termination may comprise a mounting base with a cable entry spout, the mounting base being attached to a casing of the switchgear. X-ray inspection of the sealing end termination is done while the mounting base is attached to the casing of the switchgear, i.e. without detaching the termination from the casing of the switchgear.

According to one advantageous variant of the method according to the current invention, the radiation generator and the recording media are placed at opposite sides of the mounting base.

Preferably at least several, preferably three, x-ray images are being taken from different viewing angles. The viewing angles are preferably each approximately 120 ° offset to provide a 360 ° view.

The recording media may be either a film sheet or a digital sensor.

In the event as a recording member a film sheet is utilized the film sheet is processed after exposure by the radiation generator. Utilization of a film sheet has the advantage that the film sheets can be placed around the cable sealing end termination in a curved manner. Film sheets in the sense of the current application mean a flexible carrier with a light sensitive photographic emulsion. The recording media could rather be a digital sensor with a readable electronic output.

Preferably the radiation generator is a portable x-ray generator.

In a most preferred variant of the method according to the current invention the cable sealing end termination is exposed to the radiation emitted by the radiation generator with a photon energy between 200 and 500 keV, preferably with a photon energy of about 300 keV with the next an exposure time between 3 and 10 minutes with an intensity between 20 and 30 micro Sievert per hour.

Hereinafter the invention will be explained by way of example with reference to the accompanying drawings in which:
- Figure 1: shows a schematic view of a gas insulated switchgear at a 400 kV substation with three cable sealing end terminations connected to the gas insulated switchgear,
- figure 2: shows a schematic side view of the gas insulated switchgear with a joint cable sealing end termination and with a detached cable sealing end termination in order to visualize the potential bending of the cable during connection or during detachment from the gas insulated switchgear, and
- figure 3: an enlarged view of the joint cable sealing end termination and a portable x-ray generator placed at one side of the joint cable sealing end termination.

The method according to the current invention will be briefly explained by the aid of the drawings.

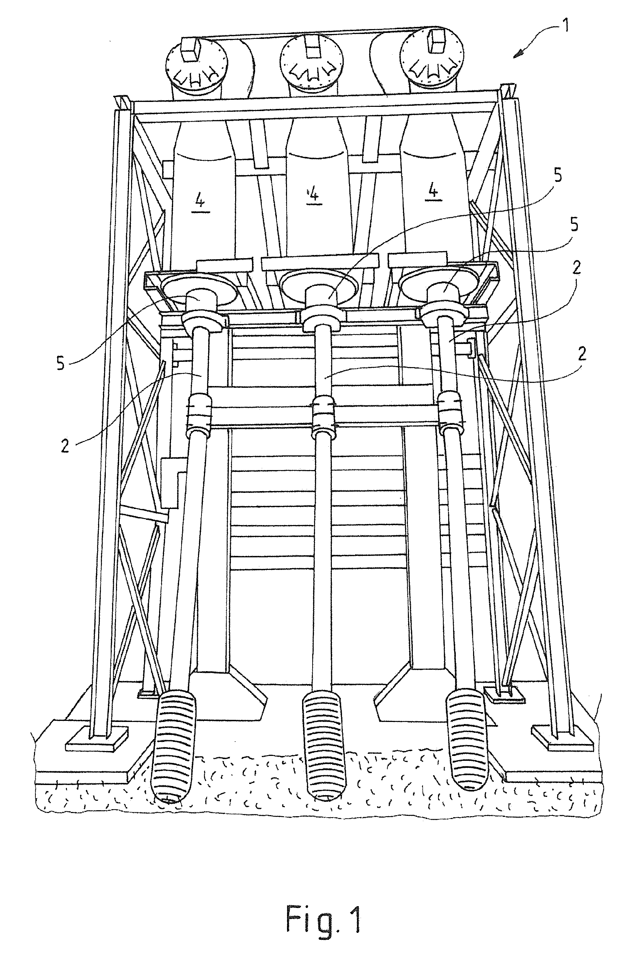

Figure 1 shows a gas insulated switchgear 1 at a high-voltage substation, in particular at a 400 kV substation which can be an interface point to a power grid.

The gas insulated switchgear 1 is connected to three high-voltage cables 2 provided each with a cable sealing end termination 3 fitted into a cylindrical steel casing 4 of the gas insulated switchgear 1.

The cable sealing end termination 3 comprises a mounting base 5 including a cable entry spout which is not visible in the drawings and which is covered by a sealing cone 6. The mounting base is connected to the steel casing 4 of the gas insulated switchgear 1 by a peripheral flange 7.

The sealing cone 6 comprises a packing around a pressurized oil seal.

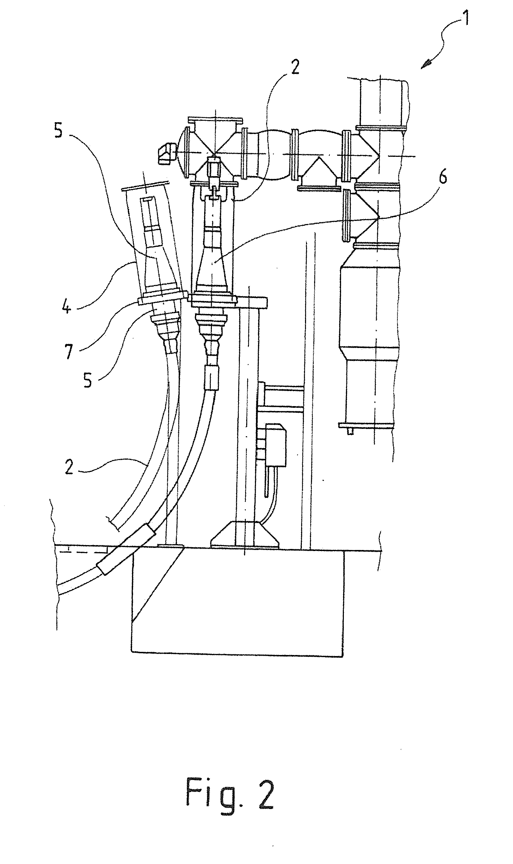

As this is illustrated by figure 2, inspection of the cable sealing end termination would normally require detaching the cable sealing end termination 3 from the gas insulated switchgear which would require disassembly of the steel casing 4 from the gas insulated switchgear and then removing of the steel casing 4 in order to dismantle the sealing cone 6. Prior to dismantling of the sealing cone 6 the oil which is kept inside the cable sealing end termination 3 would have to be drained, then the packing would have to be removed.

As this is schematically shown in figure 2 already detaching of the steel casing 4 requires bending of the high-voltage cable 2 which puts stress into the cable.

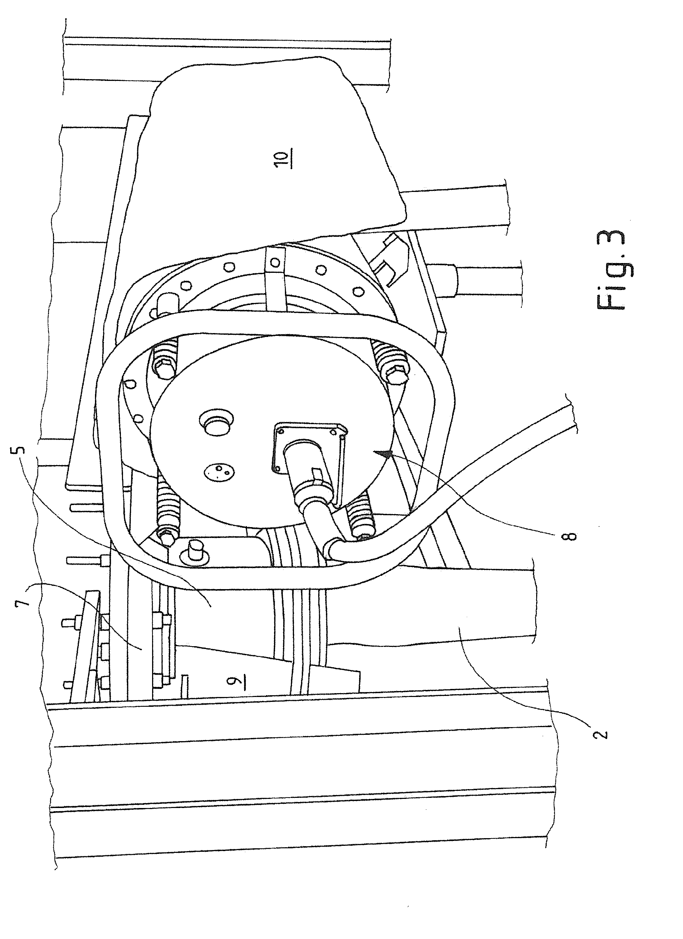

As this is shown in figure 3, instead of detaching and dismantling the cable sealing end termination 3 the method according to the invention comprises providing a portable x-ray unit 8 as a radiation generator close to the mounting base 5 of the cable sealing end termination 3 while being attached to and inserted into the steel casing 4, i.e. in situ. Moreover, a film sheet 9 as a recording media is placed on the opposite side of cylindrical part of the mounting base 5 which houses the cable entry spout. Applicants found that a loss of the sealing integrity of the oil seal occurs particularly at the cable entry spout where the spout and the packing around the oil seal are fixed by tapes. In this area the cable would be extremely exposed to stresses due to flexing and bending which might result in dislocation of the tape fixing.

The portable x-ray unit 8 is aimed towards the mounting base 5 as an x-ray target, the film sheet 9 is partly wrapped around the mounting base 5 as a recording media.

Additionally the portable x-ray unit 8 is shielded at the side facing away from the x-ray target, i.e. the mounting base 5, by an additional lead sheath 10.

The portable x-ray unit 8 after being properly aligned in front of the mounting base 5 is then energized by a remote control unit not shown. The mounting base 5 is for example exposed to x-ray waves with a maximum photon energy of about 300 kV for 3.5 minutes with for example an initial rate of 24 micro Sievert per hour.

Three images are taken at three different angles to form a 360° view of the seal condition.

The film sheet 9 is then placed into a development unit (not shown), in order to develop the film. Any void in the oil seal, taping around the oil seal and any void or thinner insulation layer is visible from the images taken.

After processing the film sheet 9 the images are compared against how the cable sealing end termination looks like physically at the time of assembly. For this purpose a reference image can be used which had been taken at the time of assembly or prior to assembly of the cable sealing end termination 3.

### Reference Numerals

- 1: gas insulated switchgear
- 2: high-voltage cable
- 3: cable sealing end termination
- 4: steel casing
- 5: mounting base
- 6: sealing cone
- 7: peripheral flange
- 8: portable x-ray unit
- 9: film sheet
- 10: lead shead

## Claims

1. Method for on-site inspection of a cable sealing end termination (3) of a high-voltage cable (2) in joint condition, comprising the following steps:
- providing a radiation generator cable of emitting upon energization electromagnetic waves with a wave length and a photon energy in the x-ray range,
- providing a photographic recording media sensitive to the electromagnetic waves,
- placing the recording media and the radiation generator at opposite sides of the cable sealing end termination (3) such that the radiation generator is directed towards the cable sealing end termination (3) as an x-ray target,
- energizing the radiation generator at least once in order to record at least one x-ray image,
- providing at least one reference image of a cable sealing end termination (3) as a test target,
- comparing the x-ray image with the reference image and subsequently assessing the sealing integrity of the cable sealing end termination.

2. Method according to claim 1, **characterized in that** the cable sealing end termination (3) is connected to an insulated switchgear.

3. Method according to anyone of the claims 1 or 2, **characterized in that** the insulated switchgear is a gas insulated switchgear (1).

4. Method according to anyone of the claims 1 to 3, **characterized in that** the cable sealing end termination (3) comprises a pressurized oil sealing.

5. Method according to anyone of the claims 1 to 4, **characterized in that** the cable sealing end termination (3) comprises a mounting base (5) with a cable entry spout, the mounting base (5) being attached to a casing of the switchgear.

6. Method according to claim 5, **characterized in that** the radiation generator and the recording media are placed at opposite sides of the mounting base (5).

7. Method according to anyone of the claims 1 to 6, **characterized in that** at least three x-ray images are being taken from different viewing angles, each approximately 120° offset to form a 360° view.

8. Method according to anyone of the claims 1 to 7, **characterized in that** the recording media is either a film sheet (9) or a digital sensor.

9. Method according to anyone of the claims 1 to 8, **characterized in that** the radiation generator is a portable x-ray unit (8).

10. Method according to anyone of the claims 1 to 9, **characterized in that** the cable sealing end termination is exposed to the radiation emitted by the radiation generator with a photon energy between 200 and 500 keV, preferably with a photon energy of about 300 keV with an exposure time between 3 and 10 minutes with an intensity between 20 and 30 micro Sievert per hour.
